# EUROPEAN PATENT SPECIFICATION

(11) **EP 3 249 875 B1**
(45) Date of publication and mention of the grant of the patent: **17.02.2021**
(21) Application number: 15886845.5
(22) Date of filing: 30.03.2015
(51) Int. Cl.: H04L 29/06, H04W 88/04

(54) **WIRELESS COMMUNICATION METHOD, REMOTE USER EQUIPMENT AND RELAY USER EQUIPMENT**
DRAHTLOSKOMMUNIKATIONSVERFAHREN, REMOTE-BENUTZERGERÄT UND RELAIS-BENUTZERGERÄT
PROCÉDÉ DE COMMUNICATION SANS FIL, ÉQUIPEMENT UTILISATEUR DISTANT ET ÉQUIPEMENT UTILISATEUR RELAIS

(43) Date of publication of application: 29.11.2017
(73) Proprietor: Huawei Technologies Co., Ltd., Longgang District Shenzhen, Guangdong 518129 (CN)
(72) Inventor: WU, Yizhuang, Shenzhen Guangdong 518129 (CN); YANG, Yanmei, Shenzhen Guangdong 518129 (CN); DENG, Qiang, Shenzhen Guangdong 518129 (CN)
(74) Representative: Epping - Hermann - Fischer
(86) International application number: PCT/CN2015/075411
(87) International publication number: WO 2016/154858

(56) References cited:
- EP-A1- 2 079 024
- EP-B1- 1 571 864
- CN-A- 104 394 146
- US-A1- 2008 256 251
- US-A1- 2010 262 699
- "3 Generation Partnership Project; Technical Specification Group Services and System Aspects; Mission Critical Push To Talk (MCPTT) over LTE; Stage 1 (Release 13)", 3GPP STANDARD; 3GPP TS 22.179, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V13.1.0, 21 March 2015 (2015-03-21), pages 1-76, XP050927972, [retrieved on 2015-03-21]

## Description

### TECHNICAL FIELD

Embodiments of the present invention relate to the wireless communications field, and more specifically, to a wireless communication method, remote user equipment, and relay user equipment.

### BACKGROUND

Mission-critical push-to-talk over Long Term Evolution (English: Long Term Evolution, LTE for short) (English: Mission Critical Push To Talk over LTE, MCPTT for short) includes a network mode of operation via relay (English: network Mode operation via Relay, NMO-R). That is, remote user equipment (English: remote user equipment, remote UE for short) can implement communication with a network by using relay user equipment (English: Relay user equipment, UE_R for short), to obtain an MCPTT service. In study of an existing MCPTT standard, an architecture based on an IP multimedia subsystem (English: IP multimedia subsystem, IMS for short) is put forward, that is, user equipment obtains the MCPTT service by using the IMS network. In an NMO-R architecture, when the MCPTT service is obtained by using an IMS network, the remote user equipment needs to execute a registration procedure by using the IMS network. In an existing IMS registration procedure, the remote user equipment first needs to obtain address information of a proxy-call session control function (English: Proxy call session control function, P-CSCF for short) in the IMS network.

In an existing standard protocol, only how user equipment accessing a network obtains the address information of the P-CSCF is described. There is no technology by using which remote user equipment (that is, user equipment that is not covered by a network) can obtain the address information of the P-CSCF in the IMS network, and the remote user equipment can complete a Session Initiation Protocol (English: Session Initiation Protocol, SIP for short) registration procedure and further obtain the MCPTT service.

US 2010/026299 A1 discloses a method for performing initial registration. The method includes receiving a server timeout message, the server timeout message including at least a field set to a value equal to a value received during a first registration. The method further includes initiating restoration procedures by performing an initial registration.

### SUMMARY

The invention is defined by the claims. Embodiments of the present invention provide a wireless communication method, remote user equipment, and relay user equipment, so that the remote user equipment can obtain address information of a P-CSCF in an IMS network.

The invention is defined by the independent claims. Advantageous embodiments of the invention are given in the sub-claims.

According to a first aspect, a wireless communication method is provided, including: receiving, by remote user equipment, at least one proxy-call session control function P-CSCF address from relay user equipment; and determining, by the remote user equipment, a target P-CSCF address from the at least one P-CSCF address, where the target P-CSCF address is used when the remote user equipment initiates a session registration procedure.

With reference to the first aspect, in a first possible implementation of the first aspect, the receiving, by remote user equipment, at least one proxy-call session control function P-CSCF address from relay user equipment includes: receiving, by the remote user equipment in a proximity service ProSe discovery procedure, the at least one P-CSCF address from the relay user equipment.

With reference to the first possible implementation of the first aspect, in a second possible implementation of the first aspect, the receiving, by the remote user equipment in a proximity service ProSe discovery procedure, the at least one P-CSCF address from the relay user equipment includes: receiving, by the remote user equipment, an announcing message from the relay user equipment in the ProSe discovery procedure, where the announcing message carries the at least one P-CSCF address.

With reference to the first or the second possible implementation of the first aspect, in a third possible implementation of the first aspect, before the receiving, by remote user equipment, at least one proxy-call session control function P-CSCF address from relay user equipment, the method includes: sending, by the remote user equipment to the relay user equipment, a discovery message that carries first indication information, where the first indication information is used to instruct the relay user equipment to send the at least one P-CSCF address to the remote user equipment according to the first indication information.

With reference to the third possible implementation of the first aspect, in a fourth possible implementation of the first aspect, the receiving, by the remote user equipment in a proximity service ProSe discovery procedure, the at least one P-CSCF address from the relay user equipment includes: receiving, by the remote user equipment, a discovery response message from the relay user equipment in the ProSe discovery procedure, where the discovery response message carries the at least one P-CSCF address.

With reference to the first aspect, in a fifth possible implementation of the first aspect, the receiving, by remote user equipment, at least one proxy-call session control function P-CSCF address from relay user equipment includes: receiving, by the remote user equipment in a proximity service ProSe connection establishment process, the at least one P-CSCF address from the relay user equipment.

With reference to the fifth possible implementation of the first aspect, in a sixth possible implementation of the first aspect, before the receiving, by the remote user equipment in a proximity service ProSe connection establishment process, the at least one P-CSCF address from the relay user equipment, the method includes: sending, by the remote user equipment to the relay user equipment, a direct communication request message that carries second indication information, where the second indication information is used to instruct the relay user equipment to send the at least one P-CSCF address to the remote user equipment according to the direct communication request message.

With reference to the sixth possible implementation of the first aspect, in a seventh possible implementation of the first aspect, the receiving, by the remote user equipment in a proximity service ProSe connection establishment process, the at least one P-CSCF address from the relay user equipment includes: receiving, by the remote user equipment, a direct communication response message returned by the relay user equipment, where the direct communication response message includes the at least one P-CSCF address.

With reference to the sixth or the seventh possible implementation of the first aspect, in an eighth possible implementation of the first aspect, the direct communication request message includes a P-CSCF address used before the remote user equipment executes a discovery procedure.

With reference to the first aspect or the first to the eighth possible implementations of the first aspect, in a ninth possible implementation of the first aspect, the P-CSCF address includes IP address information of the P-CSCF and/or a domain name of the P-CSCF.

With reference to the ninth possible implementation of the first aspect, in a tenth possible implementation of the first aspect, when the P-CSCF address is the domain name of the P-CSCF, the method further includes: receiving, by the remote user equipment, domain name server DNS information that is sent by the relay user equipment and by using which the domain name of the P-CSCF can be parsed; and obtaining, by the remote user equipment, the IP address information of the P-CSCF according to the domain name of the P-CSCF and the DNS information.

With reference to the first aspect or the first to the tenth possible implementations of the first aspect, in an eleventh possible implementation of the first aspect, the determining, by the remote user equipment, a target P-CSCF address from the at least one P-CSCF address includes: determining, by the remote user equipment, the target P-CSCF address according to at least one piece of the following information: an operator policy of the remote user equipment; a service requirement of the remote user equipment; or the P-CSCF address used before the remote user equipment executes the discovery procedure.

According to a second aspect, a wireless communication method is provided, including: obtaining, by relay user equipment, a proxy-call session control function P-CSCF address of an IP multimedia subsystem network; and sending, by the relay user equipment, at least one P-CSCF address to remote user equipment according to the obtained P-CSCF address.

With reference to the second aspect, in a first possible implementation of the second aspect, the sending, by the relay user equipment, at least one proxy-call session control function P-CSCF address to remote user equipment includes: sending, by the relay user equipment, the at least one P-CSCF address to the remote user equipment in a proximity service ProSe discovery procedure.

With reference to the first possible implementation of the second aspect, in a second possible implementation of the second aspect, the sending, by the relay user equipment, the at least one P-CSCF address to the remote user equipment in a proximity service ProSe discovery procedure includes: sending, by the relay user equipment to the remote user equipment in the ProSe discovery procedure, an announcing message that carries the at least one P-CSCF address.

With reference to the second aspect or the first possible implementation of the second aspect, in a third possible implementation of the second aspect, before the sending, by the relay user equipment, the at least one P-CSCF address to the remote user equipment in a proximity service ProSe discovery procedure, the method includes: receiving, by the relay user equipment, a discovery message that is sent by the remote user equipment and that carries first indication information, where the first indication information is used to instruct the relay user equipment to send the at least one P-CSCF address to the remote user equipment according to the first indication information.

With reference to the third possible implementation of the second aspect, in a fourth possible implementation of the second aspect, the sending, by the relay user equipment, the at least one P-CSCF address to the remote user equipment in a proximity service ProSe discovery procedure includes: sending, by the relay user equipment to the remote user equipment in the ProSe discovery procedure, a discovery response message that carries the at least one piece of P-CSCF address information.

With reference to the second aspect, in a fifth possible implementation of the second aspect, the sending, by the relay user equipment, at least one proxy-call session control function P-CSCF address to remote user equipment includes: sending, by the relay user equipment, the at least one P-CSCF address to the remote user equipment in a proximity service ProSe connection establishment process.

With reference to the fifth possible implementation of the second aspect, in a sixth possible implementation of the second aspect, before the sending, by the relay user equipment, the at least one piece of P-CSCF address to the remote user equipment in a proximity service ProSe connection establishment process, the method includes: receiving, by the relay user equipment, a direct communication request message from the remote user equipment, where the direct communication request message carries second indication information, and the second indication information is used to instruct the relay user equipment to send the at least one P-CSCF address to the remote user equipment according to the second indication information.

With reference to the fifth or the sixth possible implementation of the second aspect, in a seventh possible implementation of the second aspect, the sending, by the relay user equipment, the at least one piece of P-CSCF address to the remote user equipment in a proximity service ProSe connection establishment process includes: sending, by the relay user equipment, a direct communication response message to the remote user equipment, where the direct communication response message includes the at least one P-CSCF address.

With reference to the seventh possible implementation of the second aspect, in an eighth possible implementation of the second aspect, the method includes: when the direct communication request message sent by the remote user equipment carries a P-CSCF address used before the remote user equipment executes a discovery procedure, determining, by the relay user equipment according to an operator policy of the relay user equipment and/or the P-CSCF address used before the remote user equipment executes the discovery procedure, the at least one P-CSCF address sent to the remote user equipment.

With reference to the second aspect or the first to the eighth possible implementations of the second aspect, in a ninth possible implementation of the second aspect, the P-CSCF address includes IP address information of the P-CSCF and/or a domain name of the P-CSCF.

With reference to the ninth possible implementation of the second aspect, in a tenth possible implementation of the second aspect, when the P-CSCF address includes the domain name of the P-CSCF, the method further includes: sending, by the relay user equipment to the remote user equipment, domain name server DNS information by using which the domain name of the P-CSCF can be parsed.

According to a third aspect, remote user equipment is provided, including: a receiving unit, where the receiving unit is configured to receive at least one proxy-call session control function P-CSCF address from relay user equipment; and a determining unit, where the determining unit is configured to determine a target P-CSCF address from the at least one P-CSCF address received by the receiving unit, where the target P-CSCF address is used when the remote user equipment initiates a session registration procedure.

With reference to the third aspect, in a first possible implementation of the third aspect, the receiving unit is specifically configured to receive, in a proximity service ProSe discovery procedure, the at least one P-CSCF address from the relay user equipment.

With reference to the first possible implementation of the third aspect, in a second possible implementation of the third aspect, the receiving unit is specifically configured to receive an announcing message from the relay user equipment in the ProSe discovery procedure, where the announcing message carries the at least one P-CSCF address.

With reference to the first or the second possible implementation of the third aspect, in a third possible implementation of the third aspect, the remote user equipment further includes: a first sending unit, where the first sending unit is configured to send, to the relay user equipment, a discovery message that carries first indication information, and the first indication information is used to instruct the relay user equipment to send the at least one P-CSCF address to the remote user equipment according to the first indication information.

With reference to the third possible implementation of the third aspect, in a fourth possible implementation of the third aspect, the receiving unit is specifically configured to receive a discovery response message from the relay user equipment in the ProSe discovery procedure, where the discovery response message carries the at least one P-CSCF address.

With reference to the third aspect, in a fifth possible implementation of the third aspect, the receiving unit is configured to receive, in a proximity service ProSe connection establishment process, the at least one P-CSCF address from the relay user equipment.

With reference to the fifth possible implementation of third aspect, in a sixth possible implementation of the third aspect, the remote user equipment further includes: a second sending unit, where the second sending unit is configured to send, to the relay user equipment, a direct communication request message that carries second indication information, and the direct communication request message is used to instruct the relay user equipment to send the at least one P-CSCF address to the remote user equipment according to the direct communication request message.

With reference to the sixth possible implementation of the third aspect, in a seventh possible implementation of the third aspect, the receiving unit is specifically configured to receive a direct communication response message returned by the relay user equipment, where the direct communication response message includes the at least one P-CSCF address.

With reference to the seventh possible implementation of the third aspect, in an eighth possible implementation of the third aspect, the direct communication request message sent by the second sending unit includes a P-CSCF address used before the remote user equipment executes a discovery procedure.

With reference to the third aspect or the first to the eighth possible implementations of the third aspect, in a ninth possible implementation of the third aspect, the P-CSCF address includes IP address information of the P-CSCF and/or a domain name of the P-CSCF.

With reference to any one of the third aspect or the first to the ninth possible implementations of the third aspect, in a tenth possible implementation of the third aspect, when the P-CSCF address is the domain name of the P-CSCF, the receiving unit is specifically configured to: receive domain name server DNS information that is from the relay user equipment and by using which the domain name of the P-CSCF can be parsed; and obtain the IP address information of the P-CSCF according to the domain name of the P-CSCF and the DNS information.

With reference to the third aspect or the first to the tenth possible implementations of the third aspect, in an eleventh possible implementation of the third aspect, the determining unit is specifically configured to determine the target P-CSCF address according to at least one piece of the following information: an operator policy of the remote user equipment; a service requirement of the remote user equipment; or the P-CSCF address used before the remote user equipment executes the discovery procedure.

According to a fourth aspect, relay user equipment is provided, including: an obtaining unit, where the obtaining unit is configured to obtain a proxy-call session control function P-CSCF address of an IP multimedia subsystem network; and a sending unit, where the sending unit is configured to send at least one P-CSCF address to remote user equipment according to the P-CSCF address obtained by the obtaining unit.

With reference to the fourth aspect, in a first possible implementation of the fourth aspect, the sending unit is configured to send the at least one P-CSCF address to the remote user equipment in a proximity service ProSe discovery procedure.

With reference to the first possible implementation of the fourth aspect, in a second possible implementation of the fourth aspect, the sending unit is specifically configured to send, to the remote user equipment in the ProSe discovery procedure, an announcing message that carries the at least one P-CSCF address.

With reference to the fourth aspect or the first or the second possible implementation of the fourth aspect, in a third possible implementation of the fourth aspect, the relay user equipment further includes: a receiving unit, where the receiving unit is configured to receive a discovery message that is sent by the remote user equipment and that carries first indication information, and the first indication information is used to instruct the relay user equipment to send the at least one P-CSCF address to the remote user equipment according to the first indication information.

With reference to the third possible implementation of the fourth aspect, in a fourth possible implementation of the fourth aspect, the sending unit is specifically configured to send, to the remote user equipment in the ProSe discovery procedure, a discovery response message that carries the at least one piece of P-CSCF address information.

With reference to the fourth possible implementation of the fourth aspect, in a fifth possible implementation of the fourth aspect, the sending unit is configured to send the at least one P-CSCF address to the remote user equipment in a proximity service ProSe connection establishment process.

With reference to the fifth possible implementation of the fourth aspect, in a sixth possible implementation of the fourth aspect, the sending unit is specifically configured to receive a direct communication request message from the remote user equipment, where the direct communication request message carries second indication information, and the second indication information is used to instruct the relay user equipment to send the at least one P-CSCF address to the remote user equipment according to the second indication information.

With reference to the fifth or the sixth possible implementation of the fourth aspect, in a seventh possible implementation of the fourth aspect, the sending unit is specifically configured to send a direct communication response message to the remote user equipment, where the direct communication response message includes the at least one P-CSCF address.

With reference to the seventh possible implementation of the fourth aspect, in an eighth possible implementation of the fourth aspect, the direct communication request message received by the receiving unit carries a P-CSCF address used by the remote user equipment before the relay user equipment executes a discovery procedure, and the relay user equipment includes: a determining unit, where the determining unit is configured to determine, according to an operator policy of the relay user equipment and/or the P-CSCF address used before the remote user equipment executes the discovery procedure, the at least one P-CSCF address sent to the remote user equipment.

With reference to the fourth aspect or the first to the eighth possible implementations of the fourth aspect, in a ninth possible implementation of the fourth aspect, the P-CSCF address includes IP address information of the P-CSCF and/or a domain name of the P-CSCF.

With reference to the fourth aspect or the first to the ninth possible implementations of the fourth aspect, in a tenth possible implementation of the fourth aspect, the sending unit is specifically configured to send, to the remote user equipment, domain name server DNS information by using which the domain name of the P-CSCF can be parsed. Based on the foregoing solution, remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

### BRIEF DESCRIPTION OF DRAWINGS

FIG. 1 is a schematic flowchart of a wireless communication method according to an embodiment of the present invention;
FIG. 2 is a schematic flowchart of a wireless communication method according to another embodiment of the present invention;
FIG. 3 is a schematic flowchart of a wireless communication method according to still another embodiment of the present invention;
FIG. 4 is a schematic flowchart of a wireless communication method according to still another embodiment of the present invention;
FIG. 5 is a schematic flowchart of a wireless communication method according to still another embodiment of the present invention;
FIG. 6 is a schematic block diagram of remote user equipment in wireless communication according to an embodiment of the present invention;
FIG. 7 is a schematic block diagram of relay user equipment in wireless communication according to an embodiment of the present invention;
FIG 8 is a schematic block diagram of remote user equipment in wireless communication according to another embodiment of the present invention; and
FIG 9 is a schematic block diagram of relay user equipment in wireless communication according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should also be understood that in the embodiments of the present invention, user equipment (User Equipment, UE for short) may be referred to as a terminal (Terminal), a mobile station (Mobile Station, MS for short), a mobile terminal (Mobile Terminal), and the like. The user equipment may communicate with one or more core networks through a radio access network (Radio Access Network, RAN for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network.

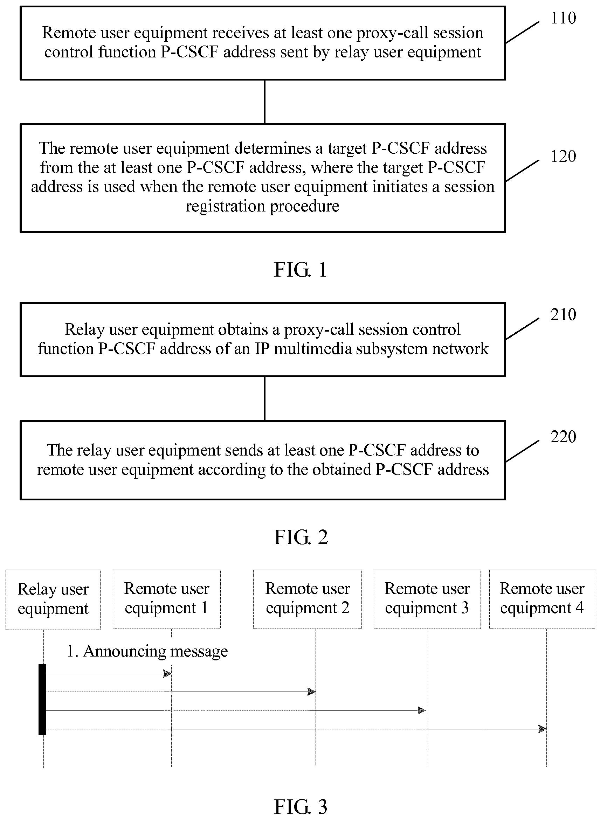

FIG. 1 is a schematic flowchart of a wireless communication method 100 in a network mode of operation via relay NMO-R scenario. The method 100 may be performed by remote user equipment. As shown in FIG. 1, the method 100 includes:
Step 110: The remote user equipment receives at least one proxy-call session control function P-CSCF address sent by relay user equipment.
Step 120: The remote user equipment determines a target P-CSCF address from the at least one P-CSCF address, where the target P-CSCF address is used when the remote user equipment initiates a session registration procedure.

Specifically, that the remote user equipment initiates a session registration procedure in step 120 is a process in which a remote user accesses an IMS network according to the target P-CSCF address and obtains an MCPTT service by using an IMS.

Based on the foregoing solution, remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

It should be understood that the remote user equipment is a device that has a ProSe capability, that is not served by an evolved universal terrestrial radio access network (English: Evolved Universal Terrestrial Radio Access Network, E-UTRAN for short), and that communicates with a network by using the relay user equipment, and the relay user equipment is user equipment that can provide a connection for the remote user equipment to obtain a service.

Optionally, in an embodiment of the present invention, that the remote user equipment receives at least one proxy-call session control function P-CSCF address sent by relay user equipment includes: receiving, by the remote user equipment in a proximity service ProSe discovery procedure, the at least one P-CSCF address sent by the relay user equipment.

Optionally, in an embodiment of the present invention, the receiving, by the remote user equipment in a proximity service ProSe discovery procedure, the at least one P-CSCF address sent by the relay user equipment includes: receiving, by the remote user equipment, an announcing message (announcing message) sent by the relay user equipment in the ProSe discovery procedure, where the announcing message carries the at least one P-CSCF address.

It should be understood that the at least one P-CSCF address received by the remote user equipment may be from different relay user equipments, that is, there may be one or more relay user equipments. Each relay user equipment may send one or more P-CSCF addresses. For example, the relay user equipment may send a P-CSCF address list to the remote user equipment. Therefore, when the remote user equipment determines that the relay user equipment needs to be used, the remote user equipment may determine a target P-CSCF address according to one or more pieces of information such as a local operator policy, a service requirement, or a P-CSCF address used by the remote user equipment before a procedure of discovering relay user equipment is performed. For example, the remote user equipment may preferentially select the P-CSCF address used before the remote user equipment executes the discovery procedure, or the remote user equipment may select a P-CSCF address that is corresponding to a P-CSCF network element in an IMS network deployed by an operator, so as to initiate, by using the target P-CSCF address, a session registration procedure to an IMS network indicated by the target P-CSCF address.

Optionally, in an embodiment of the present invention, before the remote user equipment receives the at least one proxy-call session control function P-CSCF address sent by the relay user equipment, the method further includes: sending, by the remote user equipment to the relay user equipment, a discovery message (discovery message) that carries first indication information, where the first indication information is used to notify the relay user equipment that the remote user equipment needs to obtain a P-CSCF address. It should be understood that the discovery message may be sent to each relay user equipment in a broadcast form or may be separately sent to specific relay user equipment, and a message that is sent by the remote user equipment to the relay user equipment and that carries the first indication information may be another message. This is not limited in the present invention.

Optionally, in an embodiment of the present invention, the receiving, by the remote user equipment in a proximity service ProSe discovery procedure, the at least one P-CSCF address sent by the relay user equipment includes: receiving, by the remote user equipment, a discovery response message sent by the relay user equipment in the ProSe discovery procedure according to the first instruction message, where the discovery response message carries the at least one P-CSCF address. Specifically, whether a discovery message sent by the remote user equipment carries the first indication information is determined by the remote user equipment according to an operator policy of the remote user equipment and/or a service requirement. It should be understood that the first instruction message may be carried in another message sent to the relay user equipment, or may be used as a separate instruction message to be sent. This is not limited in the present invention.

Optionally, in an embodiment of the present invention, that the remote user equipment receives at least one proxy-call session control function P-CSCF address sent by relay user equipment includes: receiving, by the remote user equipment in a proximity service ProSe connection establishment process, the at least one P-CSCF address sent by the relay user equipment. That is, a process in which the remote user equipment receives the at least one P-CSCF address sent by the relay user equipment may be executed in the ProSe discovery procedure or in the ProSe connection establishment process. This is not limited in the present invention.

Optionally, in an embodiment of the present invention, before the receiving, by the remote user equipment in a proximity service ProSe connection establishment process, the at least one P-CSCF address sent by the relay user equipment, the method includes: sending, by the remote user equipment to the relay user equipment, a direct communication request message (Direct Communication Request) that carries second indication information (Indicator), where the second indication information is used to notify the relay user equipment that the remote user equipment needs to obtain a P-CSCF address. It should be understood that the information used to instruct the relay user equipment to send the at least one P-CSCF address to the remote user equipment may be carried in another message. This is not limited in the present invention.

Specifically, whether a discovery message sent by the remote user equipment carries the second indication information is determined by the remote user equipment according to a local operator policy and/or a service requirement. It should be understood that the second indication information may be an access point name (English: Access Point Name, APN for short), or may be other information by using which the relay user equipment can determine that the remote user equipment needs to obtain a P-CSCF address. It should be further understood that the second instruction message may be carried in another message sent to the relay user equipment, or may be used as a separate instruction message to be sent. This is not limited in the present invention.

Optionally, in an embodiment of the present invention, the receiving, by the remote user equipment in a proximity service ProSe connection establishment process, the at least one P-CSCF address sent by the relay user equipment includes: receiving, by the remote user equipment, a direct communication response message returned by the relay user equipment, where the direct communication response message includes the at least one P-CSCF address.

Specifically, after the relay user equipment receives the direct communication request message sent by the remote user equipment, if the direct communication request message carries the second indication information, it is indicated that the remote user equipment needs to obtain a P-CSCF address, and the relay user equipment determines whether to initiate a P-CSCF discovery procedure. If the relay user equipment determines that the remote user equipment needs to obtain a P-CSCF address, the relay user equipment may obtain the P-CSCF address by using an IP connectivity access network (English: IP Connectivity Access Network, IP-CAN for short) session establishment procedure, or may obtain, by using a Dynamic Host Configuration Protocol (English: Dynamic Host Configuration Protocol, DHCP for short), the P-CSCF address after an IP-CAN session is established. Alternatively, the relay user equipment may directly obtain a preconfigured P-CSCF address. This is not limited in the present invention.

Optionally, in an embodiment of the present invention, the direct communication request message includes a P-CSCF address used before the remote user equipment executes a discovery procedure. That is, the remote user equipment adds, to the direct communication request message, a P-CSCF address that is used when the remote user equipment accesses a network, so that the relay user equipment determines, according to the P-CSCF address used before the remote user equipment executes the discovery procedure, the direct communication response message returned to the remote user equipment. It should be understood that the discovery procedure executed by the remote user equipment not only includes a discovery procedure that is actively and remotely initiated, but also includes a process of finding relay user equipment after a broadcast message of a relay user is received.

Optionally, in an embodiment of the present invention, when the P-CSCF address is a domain name of a P-CSCF, the method further includes: receiving, by the remote user equipment, domain name server DNS information that is sent by the relay user equipment and by using which the domain name of the P-CSCF can be parsed; and obtaining, by the remote user equipment, the IP address information of the P-CSCF according to the domain name of the P-CSCF and the DNS information.

Optionally, in an embodiment of the present invention, the P-CSCF address includes IP address information of the P-CSCF and/or a domain name of the P-CSCF. It should be understood that when a P-CSCF address sent by the relay user equipment to the remote user equipment is the domain name of the P-CSCF, the relay user equipment further needs to send a domain name server (English: Domain Name Server, DNS for short) address to the remote user equipment. Optionally, in an embodiment of the present invention, that the remote user equipment determines a target P-CSCF address from the at least one P-CSCF address includes: determining the target P-CSCF address according to at least one piece of the following information: an operator policy of the remote user equipment; a service requirement of the remote user equipment; or the P-CSCF address used before the remote user equipment executes the discovery procedure. It should be understood that the remote user equipment may determine the target P-CSCF address according to one or more pieces of the foregoing information. This is not limited in the present invention.

It should be understood that there may be one or more P-CSCF addresses used before the remote user equipment executes the discovery procedure. When the remote user equipment determines the target P-CSCF address according to the one or more P-CSCF addresses used before the remote user equipment executes the discovery procedure, the remote user equipment needs to select the target P-CSCF address according to the local operator policy, for example, a priority determined in the operator policy. This is not limited in the present invention.

Based on the foregoing solution, remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

FIG 2 is a schematic flowchart of a wireless communication method 200 in a network mode of operation via relay NMO-R scenario. The method 200 may be performed by relay user equipment. As shown in FIG. 2, the method 200 includes:
Step 210: The relay user equipment obtains a proxy-call session control function P-CSCF address of an IP multimedia subsystem network.
Step 220: The relay user equipment sends at least one P-CSCF address to remote user equipment according to the obtained P-CSCF address.

In step 210, the relay user equipment may obtain the P-CSCF address by using an IP connectivity access network (English: IP Connectivity Access Network, IP-CAN for short) session establishment procedure, or may obtain, by using a Dynamic Host Configuration Protocol (English: Dynamic Host Configuration Protocol, DHCP for short), the P-CSCF address after an IP-CAN session is established. Alternatively, the relay user equipment may directly obtain a preconfigured P-CSCF address. This is not limited in the present invention.

In step 210 and step 220, specifically, if the relay user equipment has obtained the P-CSCF address before the relay user equipment executes a discovery procedure, the relay user equipment may directly send at least one obtained P-CSCF address to the remote user equipment, or may determine, according to a local policy and an instruction message of the remote user equipment, the at least one P-CSCF address sent to the remote user equipment. If the relay user equipment needs to obtain the P-CSCF address after the relay user equipment executes a discovery procedure, the relay user equipment may obtain the P-CSCF address by using the IP-CAN session establishment procedure, or may obtain, by using the DHCP, the P-CSCF address after an IP-CAN session is established. Alternatively, the relay user equipment may directly obtain a preconfigured P-CSCF address. This is not limited in the present invention. Based on the foregoing solution, the remote user equipment in this embodiment of the present invention can obtain a P-CSCF address in an IMS network by using the relay user equipment, so that the remote user equipment can execute a SIP registration procedure according to the obtained P-CSCF address and further obtain an MCPTT service.

Optionally, in an embodiment of the present invention, that the relay user equipment sends at least one proxy-call session control function P-CSCF address to remote user equipment includes: sending, by the relay user equipment, the at least one P-CSCF address to the remote user equipment in a proximity service ProSe discovery procedure.

Optionally, in an embodiment of the present invention, the sending, by the relay user equipment, the at least one P-CSCF address to the remote user equipment in a proximity service ProSe discovery procedure includes: sending, by the relay user equipment to the remote user equipment in the ProSe discovery procedure, an announcing message (announcing message) that carries the at least one P-CSCF address. It should be understood that a message that is sent by the relay user equipment to the remote user equipment and that carries the at least one P-CSCF address may be another message. This is not limited in the present invention.

It should be understood that there may be one or more P-CSCF addresses sent by the relay user equipment to the remote user equipment. For example, the relay user equipment may send a P-CSCF address list to the remote user equipment. In addition, the relay user equipment may determine, according to a local policy and an instruction message of the remote user equipment, the one or more P-CSCF addresses sent to the remote user equipment. For example, the relay user equipment may preferentially select a P-CSCF address used before the remote user equipment executes a discovery procedure, or the relay user equipment may select a P-CSCF address that is corresponding to a P-CSCF network element in an IMS network deployed by an operator. It should be further understood that the relay user equipment may send at least one P-CSCF address to multiple remote user equipments in a broadcast manner, so that the remote user equipment determines, according to an operator policy, a service requirement, and the P-CSCF address used before the remote user equipment executes the discovery procedure, a target P-CSCF address from the at least one P-CSCF address sent by the relay user equipment. Alternatively, the relay user equipment may send the P-CSCF address to remote user equipment that sends a P-CSCF address obtaining request. This is not limited in the present invention.

Optionally, in an embodiment of the present invention, before the sending, by the relay user equipment, the at least one P-CSCF address to the remote user equipment in a proximity service ProSe discovery procedure, the method includes: receiving, by the relay user equipment, a discovery message that is sent by the remote user equipment and that carries first indication information, where the first indication information is used to notify the relay user equipment that the remote user equipment needs to obtain a P-CSCF address.

Optionally, in an embodiment of the present invention, the sending, by the relay user equipment, the at least one P-CSCF address to the remote user equipment in a proximity service ProSe discovery procedure includes: sending, by the relay user equipment to the remote user equipment in the ProSe discovery procedure according to the first indication information, a response message that carries the at least one piece of P-CSCF address information.

Optionally, in an embodiment of the present invention, that the relay user equipment sends at least one proxy-call session control function P-CSCF address to remote user equipment includes: sending, by the relay user equipment, the at least one piece of P-CSCF address information to the remote user equipment in a proximity service ProSe connection establishment process.

Optionally, in an embodiment of the present invention, before the sending, by the relay user equipment, the at least one piece of P-CSCF address information to the remote user equipment in a proximity service ProSe connection establishment process, the method includes: receiving, by the relay user equipment, a direct communication request message sent by the remote user equipment, where the request message carries second indication information, and the second indication information is used to notify the relay user equipment that the remote user equipment needs to obtain a P-CSCF address.

Specifically, whether the discovery message sent by the remote user equipment carries the second indication information is determined by the remote user equipment according to a local operator policy and/or a service requirement. It should be understood that the second indication information may be an APN, or may be other information by using which the relay user equipment can determine that the remote user equipment needs to obtain a P-CSCF address. It should be further understood that the second instruction message may be carried in another message sent to the relay user equipment, or may be used as a separate instruction message to be sent. This is not limited in the present invention.

Optionally, in an embodiment of the present invention, when the relay user equipment receives the second indication information and determines that the relay user equipment needs to send a P-CSCF address to the remote user equipment, if the relay user equipment does not obtain the P-CSCF address before, the relay user equipment initiates a P-CSCF address obtaining procedure. Specifically, the relay user equipment may obtain the P-CSCF address by using an existing PDN connection procedure, a DHCP procedure, or a preconfigured P-CSCF address.

Optionally, in an embodiment of the present invention, the sending, by the relay user equipment, the at least one piece of P-CSCF address information to the remote user equipment in a proximity service ProSe connection establishment process includes: sending, by the relay user equipment, a direct communication response message to the remote user equipment, where the direct communication response message includes the at least one P-CSCF address. Optionally, in an embodiment of the present invention, the method includes: when the direct communication request message sent by the remote user equipment carries a P-CSCF address used before the remote user equipment executes a discovery procedure, determining, by the relay user equipment according to an operator policy of the relay user equipment and/or a P-CSCF address used before the remote user equipment is disconnected from a network, the at least one P-CSCF address sent to the remote user equipment.

Optionally, in an embodiment of the present invention, the P-CSCF address includes IP address information of the P-CSCF and/or a domain name of the P-CSCF. It should be understood that when the P-CSCF address sent by the relay user equipment to the remote user equipment is the domain name of the P-CSCF, the relay user equipment further needs to send a DNS address to the remote user equipment.

Optionally, in an embodiment of the present invention, when the P-CSCF address includes the domain name of the P-CSCF, the method further includes: sending, by the relay user equipment to the remote user equipment, domain name server DNS information by using which the domain name of the P-CSCF can be parsed.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

The foregoing describes the wireless communication method in the embodiments of the present invention in detail respectively from a perspective of the remote user equipment and that of the relay user equipment with reference to FIG. 1 to FIG. 2. The following describes the wireless communication method in the embodiments of the present invention from a perspective of device interaction with reference to FIG. 3 to FIG 5.

FIG. 3 is a schematic flowchart of a wireless communication method according to still another embodiment of the present invention. As shown in FIG. 3, the figure shows relay user equipment, remote user equipment 1, remote user equipment 2, remote user equipment 3, remote user equipment 4, and remote user equipment 5.

In an NMO-R scenario, remote user equipment remote UE establishes a connection to relay user equipment relay UE in a ProSe discovery procedure, and communicates with a network by using the relay UE, so as to obtain a service. When the relay UE has obtained a P-CSCF address before the ProSe discovery procedure, the relay UE may transmit, in the discovery procedure, the P-CSCF address information and/or information used for obtaining the P-CSCF address. A specific procedure is as follows:
1. The relay user equipment needs to add, to an announcing message, the P-CSCF address and/or the information used for obtaining the P-CSCF address. A specific procedure is as follows: The relay user equipment sends an announcing message that includes one or more P-CSCF addresses.
2. When each remote user equipment determines that the relay user equipment to be used, the remote user equipment determines whether to select the relay user equipment according to information such as the P-CSCF address, an operator policy, and a service requirement in the received announcing message.

For example, in step 2, that each remote user equipment determines whether to select the relay user equipment may be: determining whether the received P-CSCF address matches a locally stored P-CSCF address list, and further determining whether the relay user equipment may be used as relay user equipment of the remote user equipment; or preferentially selecting a P-CSCF in an IMS network deployed by a subscribed operator of the remote user equipment, and determining, by using the P-CSCF in the IMS network deployed by the operator, whether to select the relay user equipment.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

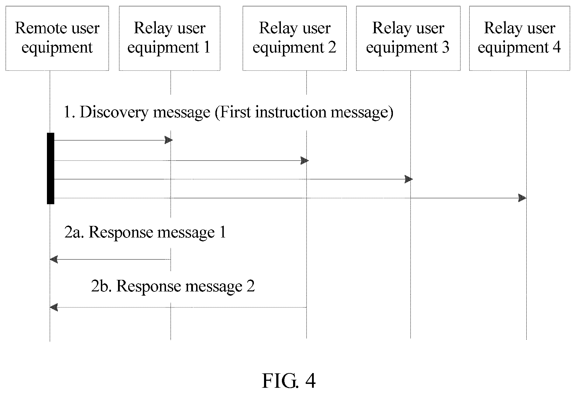

FIG. 4 is a schematic flowchart of a wireless communication method according to still another embodiment of the present invention. The figure shows remote user equipment, relay user equipment 1, relay user equipment 2, relay user equipment 3, relay user equipment 4, and relay user equipment 5.

In an NMO-R scenario, remote user equipment remote UE establishes a connection to relay user equipment relay UE in a ProSe discovery procedure, and communicates with a network by using the relay UE, so as to obtain a service. When the relay UE has obtained a P-CSCF address before the ProSe discovery procedure, the relay UE may transmit, in the discovery procedure, the P-CSCF address information and/or information used for obtaining the P-CSCF address.

When the remote user equipment determines that the remote user equipment needs to communicate with the network by using the relay user equipment, a specific procedure is as follows: 1. Send a discovery message (discovery message). The remote user equipment adds first indication information to the message according to a requirement. The first indication information indicates that the remote user equipment needs to obtain a P-CSCF address. The remote user equipment determines, according to a local policy or a service requirement, whether to add the first indication information to the message. 2. After receiving the discovery message of the remote user equipment, the relay user equipment 1, the relay user equipment 2, the relay user equipment 3, the relay user equipment 4, and the relay user equipment 5 separately determine a discovery response message according to the discovery message and respective operator policies. Specifically, as shown in the figure, the relay user equipment 1 and the relay user equipment 2 may return a response message to the remote user equipment. A response message 1 returned by the relay user equipment 1 carries a P-CSCF address obtained or determined by the relay user equipment 1, and a response message 2 returned by the relay user equipment 2 carries a P-CSCF address obtained or determined by the relay user equipment 2.

It should be understood that the P-CSCF address carried in the response message 1 and the P-CSCF address carried in the response message 2 may be IP address information of the P-CSCF and/or a domain name of the P-CSCF. When a transmitted address is the domain name of the P-CSCF, DNS address information may need to be included, so that the remote user equipment executes a DSN query to obtain an IP address of the P-CSCF. In addition, a P-CSCF address included in a message may be a P-CSCF address list, that is, the message may include multiple P-CSCF addresses.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

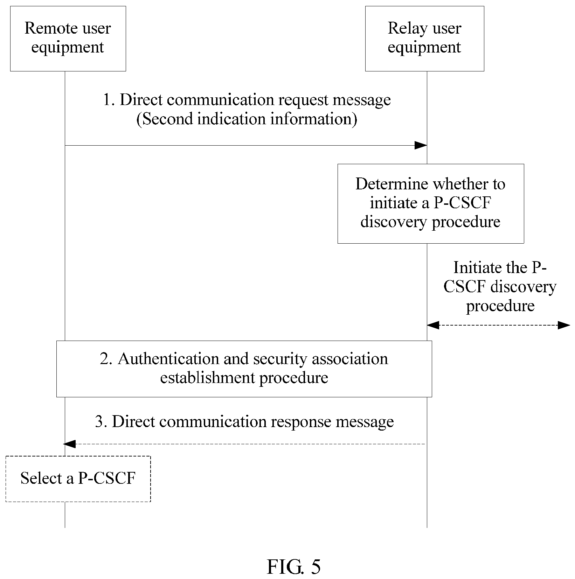

FIG. 5 is a schematic flowchart of a wireless communication method according to still another embodiment of the present invention. The figure shows remote user equipment and relay user equipment.

After a ProSe discovery procedure, the relay user equipment determines, according to indication information (may be an APN (Access Point Name, access point name)) included in a direct communication request of the remote user equipment or information that can be used to determine that the remote user equipment needs a P-CSCF address, that the remote user equipment needs to obtain the P-CSCF address, the relay user equipment sends the obtained P-CSCF address to the remote user equipment, and the remote user equipment determines the P-CSCF address according to a requirement. If the relay user equipment does not obtain the P-CSCF address before, the relay user equipment initiates a P-CSCF address obtaining procedure. The relay user equipment may obtain the P-CSCF addresses by using an existing PDN connection procedure, a DHCP procedure, or a preconfigured P-CSCF address.

A specific procedure is as follows: 1. The remote user equipment sends a direct communication request message (Direct Communication Request Message) to the relay user equipment. The request message includes second indication information that is used to indicate that the remote user equipment needs to obtain a P-CSCF address. The second indication information may be an APN. After receiving the second indication information, the relay user equipment determines whether a P-CSCF discovery procedure needs to be initiated. When the P-CSCF discovery procedure needs to be initiated, the relay user equipment initiates the P-CSCF discovery procedure, and may obtain the P-CSCF address by using an IP-CAN connection establishment procedure or a DHCP procedure, or may obtain a preconfigured P-CSCF address. 2. The remote user equipment and the relay user equipment execute an authentication and security association establishment procedure. 3. The relay user equipment sends a direct communication response message (Direct Communication Response Message) to the remote user equipment, and the direct communication response message includes at least one P-CSCF address.

When the remote user equipment receives multiple P-CSCF addresses, the remote user equipment selects an appropriate P-CSCF. A selection policy may be based on a local operator policy and/or P-CSCF address information used before the remote user equipment is disconnected from a network.

Optionally, the remote user equipment adds, to the direct communication request message, the P-CSCF address used before the remote user equipment is disconnected from a network. The relay user equipment selects an appropriate P-CSCF according to a local operator policy and the address.

It should be understood that the P-CSCF address may be IP address information of a P-CSCF and/or a domain name of the P-CSCF. When a transmitted address is the domain name of the P-CSCF, DNS address information may need to be included, so that the remote user equipment executes a DSN query to obtain an IP address of the P-CSCF. In addition, a P-CSCF address included in a message may be a P-CSCF address list, that is, the message may include multiple P-CSCF addresses.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

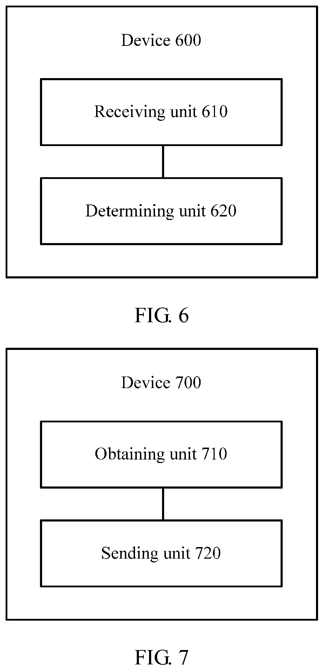

The foregoing describes the method for transmitting downlink data according to the embodiments of the present invention in detail with reference to FIG. 1 to FIG. 5. The following describes remote user equipment and relay user equipment according to the embodiments of the present invention in detail with reference to FIG. 6 to FIG 9.

FIG 6 is a schematic block diagram of remote user equipment 600 according to an embodiment of the present invention. As shown in FIG. 6, the device 600 includes:
a receiving unit 610, configured to receive at least one proxy-call session control function P-CSCF address sent by relay user equipment; and
a determining unit 620, configured to determine a target P-CSCF address from the at least one P-CSCF address received by the receiving unit, where the target P-CSCF address is used to instruct the remote user equipment to initiate a session registration procedure to an IP multimedia subsystem network indicated by the target P-CSCF address.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

Optionally, in an embodiment of the present invention, the receiving unit 610 is specifically configured to receive, in a proximity service ProSe discovery procedure, the at least one P-CSCF address sent by the relay user equipment.

Optionally, in an embodiment of the present invention, the receiving unit 610 is specifically configured to receive an announcing message (announcing message) sent by the relay user equipment in the ProSe discovery procedure, where the announcing message carries the at least one P-CSCF address.

It should be understood that the at least one P-CSCF address received by the remote user equipment may be from different relay user equipments. That is, there may be one or more relay user equipments, and each relay user equipment may send one or more P-CSCF addresses. For example, the relay user equipment may send a P-CSCF address list to the remote user equipment. Therefore, when the remote user equipment determines that the relay user equipment needs to be used, the remote user equipment may determine a target P-CSCF address according to a local operator policy and/or a service requirement, so as to initiate, by using the target P-CSCF address, a session registration procedure to an IMS network indicated by the target P-CSCF address.

Optionally, in an embodiment of the present invention, the device 600 further includes a first sending unit. The first sending unit is configured to send, to the relay user equipment, a discovery message (discovery message) that carries first indication information, and the first indication information is used to instruct the relay user equipment to send the at least one P-CSCF address to the device 600 according to the first indication information. It should be understood that the first instruction message may be carried in another message sent to the relay user equipment, or may be used as a separate instruction message to be sent. This is not limited in the present invention.

Optionally, in an embodiment of the present invention, the receiving unit 610 is specifically configured to receive a discovery response message sent by the relay user equipment in the ProSe discovery procedure, where the discovery response message carries the at least one P-CSCF address.

Optionally, in an embodiment of the present invention, the receiving unit 610 is configured to receive, in a proximity service ProSe connection establishment process, the at least one P-CSCF address sent by the relay user equipment.

Optionally, in an embodiment of the present invention, the device 600 further includes a second sending unit. The second sending unit is configured to send, to the relay user equipment, a direct communication request message that carries second indication information, and the direct communication request message is used to instruct the relay user equipment to send the at least one P-CSCF address to the device 600 according to the direct communication request message. It should be understood that the information used to instruct the relay user equipment to send the at least one P-CSCF address to the remote user equipment may be carried in another message. This is not limited in the present invention.

Specifically, whether a discovery message sent by the remote user equipment carries the second indication information is determined by the remote user equipment according to a local operator policy and/or a service requirement. It should be understood that the second indication information may be an access point name (English: Access Point Name, APN for short), or may be other information by using which the relay user equipment can determine that the remote user equipment needs to obtain a P-CSCF address. It should be further understood that the second instruction message may be carried in another message sent to the relay user equipment, or may be used as a separate instruction message to be sent. This is not limited in the present invention.

Optionally, in an embodiment of the present invention, the receiving unit 610 is specifically configured to receive a direct communication response message returned by the relay user equipment, where the direct communication response message includes the at least one P-CSCF address.

Specifically, after the relay user equipment receives the direct communication request message sent by the remote user equipment, if the direct communication request message carries the second indication information, it is indicated that the remote user equipment needs to obtain a P-CSCF address, and the relay user equipment determines whether to initiate a P-CSCF discovery procedure. If the relay user equipment determines that the remote user equipment needs to obtain a P-CSCF address, the relay user equipment may obtain the P-CSCF address by using an IP connectivity access network (English: IP Connectivity Access Network, IP-CAN for short) session establishment procedure, or may obtain, by using a Dynamic Host Configuration Protocol (English: Dynamic Host Configuration Protocol, DHCP for short), the P-CSCF address after an IP-CAN session is established. Alternatively, the relay user equipment may directly obtain a preconfigured P-CSCF address. This is not limited in the present invention. Optionally, in an embodiment of the present invention, the direct communication request message includes a P-CSCF address used before the remote user equipment executes a discovery procedure. That is, the remote user equipment adds, to the direct communication request message, a P-CSCF address that is used when the remote user equipment accesses a network, so that the relay user equipment determines, according to the P-CSCF address used before the remote user equipment is disconnected from the network, the direct communication response message returned to the remote user equipment.

Optionally, in an embodiment of the present invention, the direct communication request message sent by the second sending unit includes a P-CSCF address used by the device 600 before the remote user equipment executes a discovery procedure.

Optionally, in an embodiment of the present invention, when the P-CSCF address is a domain name of the P-CSCF, the receiving unit is specifically configured to receive domain name server DNS information that is sent by the relay user equipment and by using which the domain name of the P-CSCF can be parsed, and obtain IP address information of the P-CSCF according to the domain name of the P-CSCF and the DNS information.

Optionally, in an embodiment of the present invention, the P-CSCF address includes IP address information of the P-CSCF and/or a domain name of the P-CSCF. Optionally, in an embodiment of the present invention, the determining unit 620 is specifically configured to determine the target P-CSCF address according to at least one piece of the following information: an operator policy of the device 600; a service requirement of the device 600; or the P-CSCF address used by the device 600 before the relay user equipment executes the discovery procedure.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

FIG 7 is a schematic block diagram of relay user equipment 700 according to an embodiment of the present invention. As shown in FIG. 7, the device 700 includes:
an obtaining unit 710, configured to obtain a proxy-call session control function P-CSCF address of an IP multimedia subsystem network; and
a sending unit 720, configured to send at least one P-CSCF address to remote user equipment according to the P-CSCF address obtained by the obtaining unit.

Specifically, if the relay user equipment has obtained the P-CSCF address before the relay user equipment executes a discovery procedure, the relay user equipment may directly send at least one obtained P-CSCF address to the remote user equipment, or may determine, according to a local policy and an instruction message of the remote user equipment, the at least one P-CSCF address sent to the remote user equipment. If the relay user equipment needs to obtain the P-CSCF address after the relay user equipment executes a discovery procedure, the relay user equipment may obtain the P-CSCF address by using the IP-CAN session establishment procedure, or may obtain, by using the DHCP, the P-CSCF address after an IP-CAN session is established. Alternatively, the relay user equipment may directly obtain a preconfigured P-CSCF address. This is not limited in the present invention.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

Optionally, in an embodiment of the present invention, the sending unit 720 is configured to send the at least one P-CSCF address to the remote user equipment in a proximity service ProSe discovery procedure.

Optionally, in an embodiment of the present invention, the sending unit 720 is specifically configured to send, to the remote user equipment in the ProSe discovery procedure, an announcing message that carries the at least one P-CSCF address. It should be understood that a message that is sent by the relay user equipment to the remote user equipment and that carries the at least one P-CSCF address may be another message. This is not limited in the present invention.

It should be understood that there may be one or more P-CSCF addresses sent by the relay user equipment to the remote user equipment. For example, the relay user equipment may send a P-CSCF address list to the remote user equipment. In addition, the relay user equipment may determine, according to a local policy and an instruction message of the remote user equipment, the one or more P-CSCF addresses sent to the remote user equipment. It should be further understood that the relay user equipment may send at least one P-CSCF address to multiple remote user equipments in a broadcast manner, so that the remote user equipment determines, according to an operator policy, a service requirement, and a P-CSCF address used by the remote user equipment before the relay user equipment executes the discovery procedure, a target P-CSCF address from the at least one P-CSCF address sent by the relay user equipment. Alternatively, the relay user equipment may send the P-CSCF address to remote user equipment that sends a P-CSCF address obtaining request. This is not limited in the present invention.

Optionally, in an embodiment of the present invention, the device 700 further includes: a receiving unit, configured to receive a discovery message that is sent by the remote user equipment and that carries first indication information, and the first indication information is used to instruct the device 700 to send the at least one P-CSCF address to the remote user equipment according to the first indication information.

Optionally, in an embodiment of the present invention, the sending unit 720 is specifically configured to send, to the remote user equipment in the ProSe discovery procedure, a response message that carries the at least one piece of P-CSCF address information.

Optionally, in an embodiment of the present invention, the sending unit 720 is configured to send the at least one P-CSCF address to the remote user equipment in a proximity service ProSe connection establishment process.

Optionally, in an embodiment of the present invention, the sending unit 720 is specifically configured to receive a direct communication request message sent by the remote user equipment, where the direct communication request message carries second indication information, and the second indication information is used to instruct the relay user equipment to send the at least one P-CSCF address to the remote user equipment according to the second indication information.

Optionally, in an embodiment of the present invention, the sending unit 720 is specifically configured to send a direct communication response message to the remote user equipment, where the direct communication response message includes the at least one P-CSCF address.

Optionally, in an embodiment of the present invention, when the direct communication request message received by the receiving unit carries a P-CSCF address used before the remote user equipment executes a discovery procedure, the device 700 further includes: a determining unit, configured to determine, according to an operator policy of the device 700 and/or the P-CSCF address used before the remote user equipment executes the discovery procedure, the at least one P-CSCF address sent to the remote user equipment.

Optionally, in an embodiment of the present invention, the P-CSCF address includes IP address information of a P-CSCF and/or a domain name of the P-CSCF.

Optionally, in an embodiment of the present invention, the sending unit is specifically configured to send, to the remote user equipment, domain name server DNS information by using which the domain name of the P-CSCF can be parsed.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

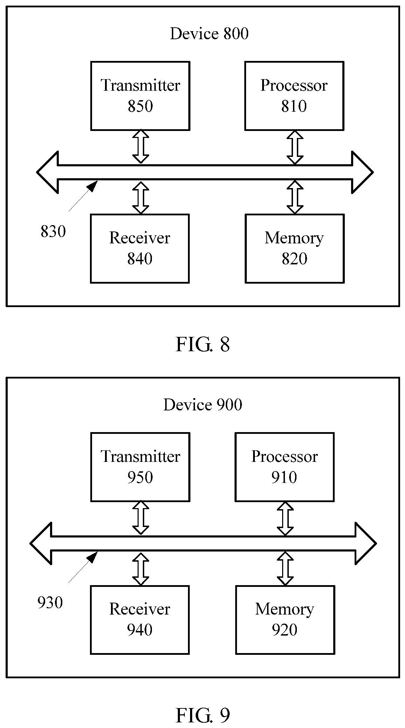

FIG. 8 is a schematic block diagram of remote user equipment in wireless communication according to another embodiment of the present invention. As shown in FIG. 8, the device 800 includes: a processor 810, a memory 820, a bus system 830, a receiver 840, and a transmitter 850. The processor 810, the memory 820, the receiver 840, and the transmitter 850 are connected by using the bus system 830. The memory 820 is configured to store an instruction. The processor 810 is configured to execute the instruction stored in the memory 820, and control the receiver 840 to receive information. The receiver 840 is configured to receive at least one proxy-call session control function P-CSCF address sent by relay user equipment. The processor 810 is configured to determine a target P-CSCF address from the at least one P-CSCF address received by the receiver 840, where the target P-CSCF address is used to instruct the device 800 to initiate a session registration procedure to an IP multimedia subsystem network indicated by the target P-CSCF address.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

It should be understood that, in this embodiment of the present invention, the processor 810 may be a central processing unit (Central Processing Unit, "CPU" for short), or the processor 810 may be another general purpose processor, a digital signal processor (DSP), an application-specific integrated circuit (ASIC), a field programmable gate array (FPGA) or another programmable logic device, discrete gate or transistor logic device, discrete hardware component, or the like. The general purpose processor may be a microprocessor, or the processor may be any conventional processor, or the like.

The memory 820 may include a read-only memory and a random access memory, and provide an instruction and data to the processor 810. A part of the memory 820 may further include a nonvolatile random access memory. For example, the memory 820 may further store information about a device type.

In addition to a data bus, the bus system 830 may include a power bus, a control bus, a status signal bus, and the like. However, for clarity of description, various buses are marked as the bus system 830 in the figure.

In an implementation process, the steps in the foregoing method may be completed by using an integrated logic circuit of hardware in the processor 810 or an instruction in a form of software. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 820. The processor 810 reads information in the memory 820, and completes the steps of the foregoing method in combination with hardware of the processor 810. To avoid repetition, details are not described herein again.

Optionally, in an embodiment of the present invention, the receiver 810 is specifically configured to receive, in a proximity service ProSe discovery procedure, the at least one P-CSCF address sent by the relay user equipment.

Optionally, in an embodiment of the present invention, the receiver 810 is specifically configured to receive an announcing message sent by the relay user equipment in the ProSe discovery procedure, where the announcing message carries the at least one P-CSCF address.

Optionally, in an embodiment of the present invention, the device 800 further includes the transmitter 850. The transmitter 850 is configured to send, to the relay user equipment, a discovery message that carries first indication information. The first indication information is used to instruct the relay user equipment to send the at least one P-CSCF address to the device 800 according to the first indication information.

Optionally, in an embodiment of the present invention, the receiver 810 is specifically configured to receive a discovery response message sent by the relay user equipment in the ProSe discovery procedure, where the discovery response message carries the at least one P-CSCF address.

Optionally, in an embodiment of the present invention, the receiver 810 is configured to receive, in a proximity service ProSe connection establishment process, the at least one P-CSCF address sent by the relay user equipment.

Optionally, in an embodiment of the present invention, the device 800 further includes the transmitter 850. The transmitter 850 is configured to send, to the relay user equipment, a direct communication request message that carries second indication information, and the direct communication request message is used to instruct the relay user equipment to send the at least one P-CSCF address to the device 800 according to the direct communication request message.

Optionally, in an embodiment of the present invention, the receiver 810 is specifically configured to receive a direct communication response message returned by the relay user equipment, where the direct communication response message includes the at least one P-CSCF address.

Optionally, in an embodiment of the present invention, the direct communication request message sent by the transmitter 850 includes a P-CSCF address used before the device 800 executes a discovery procedure.

Optionally, in an embodiment of the present invention, the P-CSCF address includes IP address information of a P-CSCF and/or a domain name of the P-CSCF. Optionally, in an embodiment of the present invention, the processor 820 is specifically configured to determine the target P-CSCF address according to at least one piece of the following information: an operator policy of the device 800; a service requirement of the device 800; or the P-CSCF address used before the device 800 executes the discovery procedure.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

FIG. 9 is a schematic block diagram of relay user equipment in wireless communication according to another embodiment of the present invention. As shown in FIG. 9, the device 900 includes: a processor 910, a memory 920, a bus system 930, a receiver 940, and a transmitter 950. The processor 910, the memory 920, the receiver 940, and the transmitter 950 are connected by using the bus system 930. The memory 920 is configured to store an instruction. The processor 910 is configured to execute the instruction stored in the memory 920, and control the receiver 940 to receive information. The receiver 940 and the processor 910 are configured to obtain a proxy-call session control function P-CSCF address of an IP multimedia subsystem network. The transmitter 950 is configured to send at least one P-CSCF address to remote user equipment according to the P-CSCF address obtained by the receiver 940 and the processor 910.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

It should be understood that, in this embodiment of the present invention, the processor 910 may be a central processing unit (Central Processing Unit, "CPU" for short), or the processor 910 may be another general purpose processor, a digital signal processor (DSP), an application-specific integrated circuit (ASIC), a field programmable gate array (FPGA) or another programmable logic device, discrete gate or transistor logic device, discrete hardware component, or the like. The general purpose processor may be a microprocessor, or the processor may be any conventional processor, or the like.

The memory 920 may include a read-only memory and a random access memory, and provide an instruction and data to the processor 910. A part of the memory 920 may further include a nonvolatile random access memory. For example, the memory 920 may further store information about a device type.

In addition to a data bus, the bus system 930 may include a power bus, a control bus, a status signal bus, and the like. However, for clarity of description, various buses are marked as the bus system 930 in the figure.

In an implementation process, the steps in the foregoing method may be completed by using an integrated logic circuit of hardware in the processor 910 or an instruction in a form of software. The steps of the method disclosed with reference to the embodiments of the present invention may be directly performed by a hardware processor, or may be performed by using a combination of hardware in the processor and a software module. The software module may be located in a mature storage medium in the field, such as a random access memory, a flash memory, a read-only memory, a programmable read-only memory, an electrically-erasable programmable memory, or a register. The storage medium is located in the memory 920. The processor 910 reads information in the memory 920, and completes the steps of the foregoing method in combination with hardware of the processor 910. To avoid repetition, details are not described herein again.

Optionally, in an embodiment of the present invention, the transmitter 950 is configured to send the at least one P-CSCF address to the remote user equipment in a proximity service ProSe discovery procedure.

Optionally, in an embodiment of the present invention, the transmitter 950 is specifically configured to send, to the remote user equipment in the ProSe discovery procedure, an announcing message that carries the at least one P-CSCF address.

Optionally, in an embodiment of the present invention, the receiver 940 is configured to receive a discovery message that is sent by the remote user equipment and that carries first indication information, and the first indication information is used to instruct the device 900 to send the at least one P-CSCF address to the remote user equipment according to the first indication information.

Optionally, in an embodiment of the present invention, the transmitter 950 is specifically configured to send, to the remote user equipment in the ProSe discovery procedure, a discovery response message that carries the at least one piece of P-CSCF address information.

Optionally, in an embodiment of the present invention, the transmitter 950 is configured to send the at least one P-CSCF address to the remote user equipment in a proximity service ProSe connection establishment process.

Optionally, in an embodiment of the present invention, the transmitter 950 is specifically configured to receive a direct communication request message sent by the remote user equipment, where the direct communication request message carries second indication information, and the second indication information is used to instruct the relay user equipment to send the at least one P-CSCF address to the remote user equipment according to the second indication information.

Optionally, in an embodiment of the present invention, the transmitter 950 is specifically configured to send a direct communication response message to the remote user equipment, where the direct communication response message includes the at least one P-CSCF address.

Optionally, in an embodiment of the present invention, when the direct communication request message received by the receiver 940 carries a P-CSCF address used before the remote user equipment executes a discovery procedure, the processor 910 is further configured to determine, according to an operator policy of the device 900 and/or the P-CSCF address used before the remote user equipment executes the discovery procedure, the at least one P-CSCF address sent to the remote user equipment.

Optionally, in an embodiment of the present invention, the P-CSCF address includes IP address information of a P-CSCF and/or a domain name of the P-CSCF.

Based on the foregoing solution, the remote user equipment in this embodiment of the present invention can obtain a P-CSCF address in an IMS network by using relay user equipment, so that the remote user equipment can execute a SIP registration procedure according to the obtained P-CSCF address and further obtain an MCPTT service.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A wireless communication method in a network mode of operation via relay, NMO-R, scenario, **characterized by** comprising:
receiving (110), by remote user equipment, at least one proxy-call session control function, P-CSCF, address from relay user equipment; and
determining (120), by the remote user equipment, a target P-CSCF address in an IP Multimedia Subsystem, IMS, network from the at least one P-CSCF address, wherein the target P-CSCF address is used when the remote user equipment initiates a Session Initiation Protocol, SIP, session registration procedure, wherein the remote user equipment is a device that has a proximity service, ProSe, capability, that is not served by an evolved universal terrestrial radio access network and that communicates with a network by using the relay user equipment, and the relay user equipment is user equipment that can provide a connection for the remote user equipment to obtain a Mission-critical push-to-talk over Long Term Evolution, MCPTT, service,
executing, by the remote user equipment, the SIP registration procedure according to the target P-CSCF address and further obtain an MCPTT service by using the IMS network.

2. The method according to claim 1, wherein the receiving, by remote user equipment, at least one P-CSCF address sent by relay user equipment comprises:
receiving, by the remote user equipment in a proximity service ProSe discovery procedure, the at least one P-CSCF address from the relay user equipment.

3. The method according to claim 2, wherein the receiving, by the remote user equipment in a proximity service, ProSe, discovery procedure, the at least one P-CSCF address from the relay user equipment comprises:
receiving, by the remote user equipment, an announcing message from the relay user equipment in the ProSe discovery procedure, wherein the announcing message carries the at least one P-CSCF address.

4. The method according to claim 2 or 3, wherein before the receiving, by remote user equipment, at least one P-CSCF address from relay user equipment, the method comprises:
sending, by the remote user equipment to the relay user equipment, a discovery message that carries first indication information, wherein the first indication information is used to instruct the relay user equipment to send the at least one P-CSCF address to the remote user equipment according to the first indication information.

5. The method according to claim 4, wherein the receiving, by the remote user equipment in a proximity service, ProSe, discovery procedure, the at least one P-CSCF address from the relay user equipment comprises:
receiving, by the remote user equipment, a discovery response message from the relay user equipment in the ProSe discovery procedure, wherein the discovery response message carries the at least one P-CSCF address.

6. The method according to claim 1, wherein the receiving, by remote user equipment, at least one P-CSCF address from relay user equipment comprises:
receiving, by the remote user equipment in a proximity service, ProSe, connection establishment process, the at least one P-CSCF address from the relay user equipment.

7. The method according to claim 6, wherein before the receiving, by the remote user equipment in a proximity service, ProSe, connection establishment process, the at least one P-CSCF address from the relay user equipment, the method comprises:
sending, by the remote user equipment to the relay user equipment, a direct communication request message that carries second indication information, wherein the second indication information is used to instruct the relay user equipment to send the at least one P-CSCF address to the remote user equipment according to the direct communication request message.

8. The method according to claim 7, wherein the receiving, by the remote user equipment in a proximity service, ProSe, connection establishment process, the at least one P-CSCF address from the relay user equipment comprises:
receiving, by the remote user equipment, a direct communication response message returned by the relay user equipment, wherein the direct communication response message comprises the at least one P-CSCF address.

9. The method according to any one of claims 1 to 8, wherein the determining, by the remote user equipment, a target P-CSCF address from the at least one P-CSCF address comprises:
determining, by the remote user equipment, the target P-CSCF address according to at least one piece of the following information:
an operator policy of the remote user equipment;
a service requirement of the remote user equipment; or
the P-CSCF address used before the remote user equipment executes the discovery procedure.

10. Remote user equipment, **characterized by** comprising:
a receiving unit (610), configured to receive at least one proxy-call session control function, P-CSCF, address from relay user equipment; and
a determining unit (620), configured to determine a target P-CSCF address in an IP Multimedia Subsystem, IMS, network from the at least one P-CSCF address received by the receiving unit(610), wherein the target P-CSCF address is used when the remote user equipment initiates a Session Initiation Protocol, SIP, session registration procedure, wherein the remote user equipment is a device that has a proximity service, ProSe, capability, that is not served by an evolved universal terrestrial radio access network and that communicates with a network by using the relay user equipment, and the relay user equipment is user equipment that can provide a connection for the remote user equipment to obtain a Mission-critical push-to-talk over Long Term Evolution, MCPTT, service; wherein
the remote user equipment is further configured to execute a registration procedure according to the target P-CSCF address and further to obtain an MCPTT service by using the IMS network.

11. The remote user equipment according to claim 10, wherein the receiving unit (610) is specifically configured to:
receive, in a proximity service, ProSe, discovery procedure, the at least one P-CSCF address from the relay user equipment.

12. The remote user equipment according to claim 11, wherein the receiving unit (610) is specifically configured to:
receive an announcing message from the relay user equipment in the ProSe discovery procedure, wherein the announcing message carries the at least one P-CSCF address.

13. The remote user equipment according to claim 11 or 12, wherein the remote user equipment further comprises:
a first sending unit, wherein the first sending unit is configured to send, to the relay user equipment, a discovery message that carries first indication information, and the first indication information is used to instruct the relay user equipment to send the at least one P-CSCF address to the remote user equipment according to the first indication information.

14. The remote user equipment according to claim 13, wherein the receiving unit (610) is specifically configured to:
receive a discovery response message from the relay user equipment in the ProSe discovery procedure, wherein the discovery response message carries the at least one P-CSCF address.

15. The remote user equipment according to claim 10, wherein the receiving unit (610) is configured to:
receive, in a proximity service, ProSe, connection establishment process, the at least one P-CSCF address from the relay user equipment.

16. The remote user equipment according to claim 15, wherein the remote user equipment further comprises:
a second sending unit, wherein the second sending unit is configured to send, to the relay user equipment, a direct communication request message that carries second indication information, and the second indication information is used to instruct the relay user equipment to send the at least one P-CSCF address to the remote user equipment according to the direct communication request message.

17. The remote user equipment according to claim 16, wherein the receiving unit (610) is specifically configured to:
receive a direct communication response message returned by the relay user equipment, wherein the direct communication response message comprises the at least one P-CSCF address.

18. The remote user equipment according to any one of claims 10 to 17, wherein the determining unit is specifically configured to determine the target P-CSCF address according to at least one piece of the following information:
an operator policy of the remote user equipment;
a service requirement of the remote user equipment; or
the P-CSCF address used before the remote user equipment executes the discovery procedure.

## Patentansprüche

1. Drahtloskommunikationsverfahren in einem Szenario eines Netzwerkbetriebsmodus über ein Relais, NMO-R, **dadurch gekennzeichnet, dass** es umfasst:
Empfangen (110), durch ein Remote-Benutzergerät, von zumindest einer "Proxy-Call Session Control Function"-Adresse, P-CSCF-Adresse, von einem Relais-Benutzergerät und
Bestimmen (120), durch das Remote-Benutzergerät, einer Ziel-P-CSCF-Adresse in einem "IP Multimedia Subsystem"-Netzwerk, IMS-Netzwerk, von der zumindest einen P-CSCF-Adresse, wobei die Ziel-P-CSCF-Adresse verwendet wird, wenn das Remote-Benutzergerät eine "Session Initiation Protocol"-Sitzungsregistrierungsprozedur, SIP-Sitzungsregistrierungsprozedur, initiiert, wobei das Remote-Benutzergerät eine Vorrichtung ist, die eine Näherungsdienstfunktion, ProSe-Funktion, aufweist, die nicht durch ein "Evolved Universal Terrestrial Radio Access Network" bedient wird und die mit einem Netzwerk durch Verwenden des Relais-Benutzergeräts kommuniziert, und das Relais-Benutzergerät ein Benutzergerät ist, das eine Verbindung für das Remote-Benutzergerät bereitstellen kann, um einen "Mission-Critical Push-To-Talk"-Dienst, MCPTT-Dienst, über "Long Term Evolution" zu erhalten,
Ausführen, durch das Remote-Benutzergerät, der SIP-Registrierungsprozedur gemäß der Ziel-P-CSCF-Adresse und ferner Erhalten eines MCPTT-Diensts durch Verwenden des IMS-Netzwerks.

2. Verfahren nach Anspruch 1, wobei das Empfangen, durch ein Remote-Benutzergerät, von zumindest einer durch das Relais-Benutzergerät gesendeten P-CSCF-Adresse umfasst:
Empfangen, durch das Remote-Benutzergerät in einer Näherungsdienstermittlungsprozedur, ProSe-Ermittlungsprozedur, der zumindest einen P-CSCF-Adresse von dem Relais-Benutzergerät.

3. Verfahren nach Anspruch 2, wobei das Empfangen, durch das Remote-Benutzergerät in einer Näherungsdienstermittlungsprozedur, ProSe-Ermittlungsprozedur, der zumindest einen P-CSCF-Adresse von dem Relais-Benutzergerät umfasst:
Empfangen, durch das Remote-Benutzergerät, einer Ankündigungsnachricht von dem Relais-Benutzergerät in der ProSe-Ermittlungsprozedur, wobei die Ankündigungsnachricht die zumindest eine P-CSCF-Adresse enthält.

4. Verfahren nach Anspruch 2 oder 3, wobei, vor dem Empfangen, durch ein Remote-Benutzergerät, von zumindest einer P-CSCF-Adresse von einem Relais-Benutzergerät, das Verfahren umfasst:
Senden, durch das Remote-Benutzergerät an das Relais-Benutzergerät, einer Ermittlungsnachricht, die erste Hinweisinformationen enthält, wobei die ersten Hinweisinformationen verwendet werden, um das Relais-Benutzergerät anzuweisen, die zumindest eine P-CSCF-Adresse an das Remote-Benutzergerät gemäß den ersten Hinweisinformationen zu senden.

5. Verfahren nach Anspruch 4, wobei das Empfangen, durch das Remote-Benutzergerät in einer Näherungsdiensterkennungsprozedur, ProSe-Erkennungsprozedur, der zumindest einen P-CSCF-Adresse von dem Relais-Benutzergerät umfasst:
Empfangen, durch das Remote-Benutzergerät, einer Ermittlungsantwortnachricht von dem Relais-Benutzergerät in der ProSe-Ermittlungsprozedur, wobei die Ermittlungsantwortnachricht die zumindest eine P-CSCF-Adresse enthält.

6. Verfahren nach Anspruch 1, wobei das Empfangen, durch ein Remote-Benutzergerät, von zumindest einer P-CSCF-Adresse von einem Relais-Benutzergerät umfasst:
Empfangen, durch das Remote-Benutzergerät in einem Näherungsdienstverbindungsherstellungsprozess, ProSe-Verbindungsherstellungsprozess, der zumindest einen P-CSCF-Adresse von dem Relais-Benutzergerät.

7. Verfahren nach Anspruch 6, wobei, vor dem Empfangen, durch das Remote-Benutzergerät in einem Näherungsdienstverbindungsherstellungsprozess, ProSe-Verbindungsherstellungsprozess, der zumindest einen P-CSCF-Adresse von dem Relais-Benutzergerät, das Verfahren umfasst:
Senden, durch das Remote-Benutzergerät an das Relais-Benutzergerät, einer direkten Kommunikationsanforderungsnachricht, die zweite Hinweisinformationen enthält, wobei die zweiten Hinweisinformationen verwendet werden, um das Relais-Benutzergerät anzuweisen, die zumindest eine P-CSCF-Adresse an das Remote-Benutzergerät gemäß der direkten Kommunikationsanforderungsnachricht zu senden.

8. Verfahren nach Anspruch 7, wobei das Empfangen, durch das Remote-Benutzergerät in einem Näherungsdienstverbindungsherstellungsprozess, ProSe-Verbindungsherstellungsprozess, der zumindest einen P-CSCF-Adresse von dem Relais-Benutzergerät umfasst:
Empfangen, durch das Remote-Benutzergerät, einer durch das Relais-Benutzergerät zurückgegebenen direkten Kommunikationsantwortnachricht, wobei die direkte Kommunikationsantwortnachricht die zumindest eine P-CSCF-Adresse umfasst.

9. Verfahren nach einem der Ansprüche 1 bis 8, wobei das Bestimmen, durch das Remote-Benutzergerät, einer Ziel-P-CSCF-Adresse von der zumindest einen P-CSCF-Adresse umfasst:
Bestimmen, durch das Remote-Benutzergerät, der Ziel-P-CSCF-Adresse gemäß zumindest einem Element der folgenden Informationen:
einer Betreiberrichtlinie des Remote-Benutzergeräts;
einer Dienstanforderung des Remote-Benutzergeräts oder
der P-CSCF-Adresse, die verwendet wird, bevor das Remote-Benutzergerät die Ermittlungsprozedur ausführt.

10. Remote-Benutzergerät, **dadurch gekennzeichnet, dass** es umfasst:
eine Empfangseinheit (610), die dazu ausgelegt ist, zumindest eine "Proxy-Call Session Control Function"-Adresse, P-CSCF-Adresse, von einem Relais-Benutzergerät zu empfangen; und
eine Bestimmungseinheit (620), die dazu ausgelegt ist, eine Ziel-P-CSCF-Adresse in einem "IP Multimedia Subsystem"-Netzwerk, IMS-Netzwerk, von der zumindest einen durch die Empfangseinheit (610) empfangenen P-CSCF-Adresse zu bestimmen, wobei die Ziel-P-CSCF-Adresse verwendet wird, wenn das Remote-Benutzergerät eine "Session Initiation Protocol"-Sitzungsregistrierungsprozedur, SIP-Sitzungsregistrierungsprozedur, initiiert, wobei das Remote-Benutzergerät eine Vorrichtung ist, die eine Näherungsdienstfunktion, ProSe-Funktion, aufweist, die nicht durch ein "Evolved Universal Terrestrial Radio Access Network" bedient wird und die mit einem Netzwerk durch Verwenden des Relais-Benutzergeräts kommuniziert, und das Relais-Benutzergerät ein Benutzergerät ist, das eine Verbindung für das Remote-Benutzergerät bereitstellen kann, um einen "Mission-Critical Push-To-Talk"-Dienst, MCPTT-Dienst, über "Long Term Evolution" zu erhalten; wobei
das Remote-Benutzergerät ferner dazu ausgelegt ist, eine Registrierungsprozedur gemäß der Ziel-P-CSCF-Adresse auszuführen und ferner einen MCPTT-Dienst durch Verwenden des IMS-Netzwerks zu erhalten.

11. Remote-Benutzergerät nach Anspruch 10, wobei die Empfangseinheit (610) insbesondere ausgelegt ist zum:
Empfangen, in einer Näherungsdienstermittlungsprozedur, ProSe-Ermittlungsprozedur, der zumindest einen P-CSCF-Adresse von dem Relais-Benutzergerät.

12. Remote-Benutzergerät nach Anspruch 11, wobei die Empfangseinheit (610) insbesondere ausgelegt ist zum:
Empfangen einer Ankündigungsnachricht von dem Relais-Benutzergerät in der ProSe-Ermittlungsprozedur, wobei die Ankündigungsnachricht die zumindest eine P-CSCF-Adresse enthält.

13. Remote-Benutzergerät nach Anspruch 11 oder 12, wobei das Remote-Benutzergerät ferner umfasst:
eine erste Sendeeinheit, wobei die erste Sendeeinheit dazu ausgelegt ist, an das Relais-Benutzergerät eine Ermittlungsnachricht zu senden, die erste Hinweisinformationen enthält, und die ersten Hinweisinformationen verwendet werden, um das Relais-Benutzergerät anzuweisen, die zumindest eine P-CSCF-Adresse an das Remote-Benutzergerät gemäß den ersten Hinweisinformationen zu senden.

14. Remote-Benutzergerät nach Anspruch 13, wobei die Empfangseinheit (610) insbesondere ausgelegt ist zum:
Empfangen einer Ermittlungsantwortnachricht von dem Relais-Benutzergerät in der ProSe-Ermittlungsprozedur, wobei die Ermittlungsantwortnachricht die zumindest eine P-CSCF-Adresse enthält.

15. Remote-Benutzergerät nach Anspruch 10, wobei die Empfangseinheit (610) ausgelegt ist zum:
Empfangen, in einem Näherungsdienstverbindungsherstellungsprozess, ProSe-Verbindungsherstellungsprozess, der zumindest einen P-CSCF-Adresse von dem Relais-Benutzergerät.

16. Remote-Benutzergerät nach Anspruch 15, wobei das Remote-Benutzergerät ferner umfasst:
eine zweite Sendeeinheit, wobei die zweite Sendeeinheit dazu ausgelegt ist, an das Relais-Benutzergerät eine direkte Kommunikationsanforderungsnachricht zu senden, die zweite Hinweisinformationen enthält, und die zweiten Hinweisinformationen verwendet werden, um das Relais-Benutzergerät anzuweisen, die zumindest eine P-CSCF-Adresse an das Remote-Benutzergerät gemäß der direkten Kommunikationsanforderungsnachricht zu senden.

17. Remote-Benutzergerät nach Anspruch 16, wobei die Empfangseinheit (610) insbesondere ausgelegt ist zum:
Empfangen einer durch das Relais-Benutzergerät zurückgegebenen direkten Kommunikationsantwortnachricht, wobei die direkte Kommunikationsantwortnachricht die zumindest eine P-CSCF-Adresse umfasst.

18. Remote-Benutzergerät nach einem der Ansprüche 10 bis 17, wobei die Bestimmungseinheit insbesondere dazu ausgelegt ist, die Ziel-P-CSCF-Adresse gemäß zumindest einem Element der folgenden Informationen zu bestimmen:
einer Betreiberrichtlinie des Remote-Benutzergeräts;
einer Dienstanforderung des Remote-Benutzergeräts oder
der P-CSCF-Adresse, die verwendet wird, bevor das Remote-Benutzergerät die Ermittlungsprozedur ausführt.

## Revendications

1. Procédé de communication sans fil dans un scénario de mode de fonctionnement en réseau via un relais, NMO-R, **caractérisé en ce qu'**il comprend les étapes consistant à :
recevoir (110), par un équipement d'utilisateur distant, au moins une adresse de fonction de commande de session d'appel de mandataire, P-CSCF, en provenance d'un équipement d'utilisateur relais ; et
déterminer (120), par l'équipement d'utilisateur distant, une adresse P-CSCF cible dans un réseau de sous-système multimédia IP, IMS, à partir de ladite au moins une adresse P-CSCF, l'adresse P-CSCF cible étant utilisée lorsque l'équipement d'utilisateur distant lance une procédure d'inscription de session de protocole de lancement de session, SIP, l'équipement d'utilisateur distant étant un dispositif qui possède une capacité de service de proximité, ProSe, qui n'est pas desservi par un réseau d'accès radio terrestre universel évolué et qui communique avec un réseau au moyen de l'équipement d'utilisateur relais, et l'équipement d'utilisateur relais étant un équipement d'utilisateur capable de fournir une connexion à l'équipement d'utilisateur distant pour lui permettre d'obtenir un service push-to-talk essentiel sur évolution à long terme, MCPTT,
exécuter, par l'équipement d'utilisateur distant, la procédure d'inscription SIP en fonction de l'adresse P-CSCF cible, puis obtenir un service MCPTT au moyen du réseau IMS.

2. Procédé selon la revendication 1, dans lequel la réception, par un équipement d'utilisateur distant, d'au moins une adresse P-CSCF envoyée par un équipement d'utilisateur relais comprend l'étape consistant à :
recevoir, par l'équipement d'utilisateur distant dans une procédure de découverte de service de proximité ProSe, ladite au moins une adresse P-CSCF en provenance de l'équipement d'utilisateur relais.

3. Procédé selon la revendication 2, dans lequel la réception, par l'équipement d'utilisateur distant dans une procédure de découverte de service de proximité, ProSe, de ladite au moins une adresse P-CSCF en provenance de l'équipement d'utilisateur relais comprend l'étape consistant à :
recevoir, par l'équipement d'utilisateur distant, un message d'annonce provenant de l'équipement d'utilisateur relais dans la procédure de découverte ProSe, le message d'annonce transportant ladite au moins une adresse P-CSCF.

4. Procédé selon la revendication 2 ou 3, le procédé, avant la réception, par l'équipement d'utilisateur distant, d'au moins une adresse P-CSCF en provenance de l'équipement d'utilisateur relais, comprenant l'étape consistant à :
envoyer, par l'équipement d'utilisateur distant à l'équipement d'utilisateur relais, un message de découverte qui transporte des premières informations d'indication, les premières informations d'indication servant à ordonner à l'équipement d'utilisateur relais d'envoyer ladite au moins une adresse P-CSCF à l'équipement d'utilisateur distant en fonction des premières informations d'indication.

5. Procédé selon la revendication 4, dans lequel la réception, par l'équipement d'utilisateur distant dans une procédure de découverte de service de proximité, ProSe, de ladite au moins une adresse P-CSCF en provenance de l'équipement d'utilisateur relais comprend l'étape consistant à :
recevoir, par l'équipement d'utilisateur distant, un message de réponse de découverte provenant de l'équipement d'utilisateur relais dans la procédure de découverte ProSe, le message de réponse de découverte transportant ladite au moins une adresse P-CSCF.

6. Procédé selon la revendication 1, dans lequel la réception, par l'équipement d'utilisateur distant, d'au moins une adresse P-CSCF en provenance d'un équipement d'utilisateur relais comprend l'étape consistant à :
recevoir, par l'équipement d'utilisateur distant dans un processus d'établissement de connexion de service de proximité, ProSe, ladite au moins une adresse P-CSCF en provenance de l'équipement d'utilisateur relais.

7. Procédé selon la revendication 6, le procédé, avant la réception, par l'équipement d'utilisateur distant dans un processus d'établissement de connexion de service de proximité, ProSe, de ladite au moins une adresse P-CSCF en provenance de l'équipement d'utilisateur relais, comprenant l'étape consistant à :
envoyer, par l'équipement d'utilisateur distant à l'équipement d'utilisateur relais, un message de demande de communication directe qui transporte des deuxièmes informations d'indication, les deuxièmes informations d'indication servant à ordonner à l'équipement d'utilisateur relais d'envoyer ladite au moins une adresse P-CSCF à l'équipement d'utilisateur distant en fonction du message de demande de communication directe.

8. Procédé selon la revendication 7, dans lequel la réception, par l'équipement d'utilisateur distant dans un processus d'établissement de connexion de service de proximité, ProSe, de ladite au moins une adresse P-CSCF en provenance de l'équipement d'utilisateur relais comprend l'étape consistant à :
recevoir, par l'équipement d'utilisateur distant, un message de réponse de communication directe renvoyé par l'équipement d'utilisateur relais, le message de réponse de communication directe contenant ladite au moins une adresse P-CSCF.

9. Procédé selon l'une quelconque des revendications 1 à 8, dans lequel la détermination, par l'équipement d'utilisateur distant, d'une adresse P-CSCF cible à partir de ladite au moins une adresse P-CSCF comprend l'étape consistant à :
déterminer, par l'équipement d'utilisateur distant, l'adresse P-CSCF cible d'après au moins un élément d'information faisant partie des informations suivantes :
une politique d'opérateur de l'équipement d'utilisateur distant ;
une exigence de service de l'équipement d'utilisateur distant ; et
l'adresse P-CSCF utilisée avant que l'équipement d'utilisateur distant n'exécute la procédure de découverte.

10. Équipement d'utilisateur distant, **caractérisé en ce qu'**il comprend :
une unité de réception (610), configurée pour recevoir au moins une adresse de fonction de commande de session d'appel de mandataire, P-CSCF, en provenance d'un équipement d'utilisateur relais ; et
une unité de détermination (620), configurée pour déterminer une adresse P-CSCF cible dans un réseau de sous-système multimédia IP, IMS, à partir de ladite au moins une adresse P-CSCF reçue par l'unité de réception (610), l'adresse P-CSCF cible étant utilisée lorsque l'équipement d'utilisateur distant lance une procédure d'inscription de session de protocole de lancement de session, SIP, l'équipement d'utilisateur distant étant un dispositif qui possède une capacité de service de proximité, ProSe, qui n'est pas desservi par un réseau d'accès radio terrestre universel évolué et qui communique avec un réseau au moyen de l'équipement d'utilisateur relais, et l'équipement d'utilisateur relais étant un équipement d'utilisateur capable de fournir une connexion à l'équipement d'utilisateur distant pour lui permettre d'obtenir un service push-to-talk essentiel sur évolution à long terme, MCPTT ;
l'équipement d'utilisateur distant étant également configuré pour exécuter une procédure d'inscription en fonction de l'adresse P-CSCF cible, puis pour obtenir un service MCPTT au moyen du réseau IMS.

11. Équipement d'utilisateur distant selon la revendication 10, dans lequel l'unité de réception (610) est spécifiquement configurée pour :
recevoir, dans une procédure de découverte de service de proximité, ProSe, ladite au moins une adresse P-CSCF en provenance de l'équipement d'utilisateur relais.

12. Équipement d'utilisateur distant selon la revendication 11, dans lequel l'unité de réception (610) est spécifiquement configurée pour :
recevoir un message d'annonce provenant de l'équipement d'utilisateur relais dans la procédure de découverte ProSe, le message d'annonce transportant ladite au moins une adresse P-CSCF.

13. Équipement d'utilisateur distant selon la revendication 11 ou 12, l'équipement d'utilisateur distant comprenant également :
une première unité d'envoi, la première unité d'envoi étant configurée pour envoyer, à l'équipement d'utilisateur relais, un message de découverte qui transporte des premières informations d'indication, les premières informations d'indication servant à ordonner à l'équipement d'utilisateur relais d'envoyer ladite au moins une adresse P-CSCF à l'équipement d'utilisateur distant en fonction des premières informations d'indication.

14. Équipement d'utilisateur distant selon la revendication 13, dans lequel l'unité de réception (610) est spécifiquement configurée pour :
recevoir un message de réponse de découverte provenant de l'équipement d'utilisateur relais dans la procédure de découverte ProSe, le message de réponse de découverte transportant ladite au moins une adresse P-CSCF.

15. Équipement d'utilisateur distant selon la revendication 10, dans lequel l'unité de réception (610) est configurée pour :
recevoir, dans un processus d'établissement de connexion de service de proximité, ProSe, ladite au moins une adresse P-CSCF en provenance de l'équipement d'utilisateur relais.

16. Équipement d'utilisateur distant selon la revendication 15, l'équipement d'utilisateur distant comprenant également :
une deuxième unité d'envoi, la deuxième unité d'envoi étant configurée pour envoyer, à l'équipement d'utilisateur relais, un message de demande de communication directe qui transporte des deuxièmes informations d'indication, les deuxièmes informations d'indication servant à ordonner à l'équipement d'utilisateur relais d'envoyer ladite au moins une adresse P-CSCF à l'équipement d'utilisateur distant en fonction du message de demande de communication directe.

17. Équipement d'utilisateur distant selon la revendication 16, dans lequel l'unité de réception (610) est spécifiquement configurée pour :
recevoir un message de réponse de communication directe renvoyé par l'équipement d'utilisateur relais, le message de réponse de communication directe contenant ladite au moins une adresse P-CSCF.

18. Équipement d'utilisateur distant selon l'une quelconque des revendications 10 à 17, dans lequel l'unité de détermination est spécifiquement configurée pour déterminer l'adresse P-CSCF cible d'après au moins un élément d'information faisant partie des informations suivantes :
une politique d'opérateur de l'équipement d'utilisateur distant ;
une exigence de service de l'équipement d'utilisateur distant ; et
l'adresse P-CSCF utilisée avant que l'équipement d'utilisateur distant n'exécute la procédure de découverte.
